# EUROPÄISCHE PATENTSCHRIFT

(11) **EP 0 940 058 B1**
(45) Veröffentlichungstag und Bekanntmachung des Hinweises auf die Patenterteilung: **26.12.2007**
(21) Anmeldenummer: 97912031.8
(22) Anmeldetag: 26.09.1997
(51) Int. Cl.: H04Q 9/00

(54) **SLAVE-STATION, BUS-SYSTEM UND VERFAHREN ZUM BETREIBEN EINES BUS-SYSTEMS**
SLAVE STATION, BUS SYSTEM AND METHOD FOR OPERATING A BUS
STATION ASSERVIE, SYSTEME DE BUS ET PROCEDE D'EXPLOITATION D'UN SYSTEME DE BUS

(30) Priorität: 19.11.1996 DE 19647668
(43) Veröffentlichungstag der Anmeldung: 08.09.1999
(73) Patentinhaber: ROBERT BOSCH GMBH, 70442 Stuttgart (DE)
(72) Erfinder: NITSCHKE, Werner, D-71254 Ditzingen (DE); KARL, Otto, D-71229 Leonberg (DE); BAUER, Joachim, D-71720 Oberstenfeld Prevorst (DE)
(86) Internationale Anmeldenummer: PCT/DE1997/002223
(87) Internationale Veröffentlichungsnummer: WO 1998/023124

(56) Entgegenhaltungen:
- WO-A-90/01245
- DE-A- 3 330 904
- GB-A- 1 507 609
- US-A- 4 209 666

## Beschreibung

### Stand der Technik

Die Erfindung geht aus von einer Slave-Station, einem BUS-System und einem Verfahren zum Betreiben eines BUS-Systems nach der Gattung der unabhängigen Patentansprüche. Es sind bereits BUS-Systeme bekannt, bei denen eine Vielzahl von Slave-Stationen über BUS-Leitungen mit einer Master-Station verbunden sind. Die elektrische Versorgung der Slave-Stationen erfolgt dabei durch die von der Master-Station angelegte Versorgungsspannung.

In der Offenlegungsschrift DE 33 30 904 A1 wird ein Messwertübertragungssystem beschrieben. Dabei können mehrere Messwertgebereinrichtungen über eine Zweidrahtleitung parallel mit einem Messwertempfänger verbunden sein. Die Messwertgebereinrichtungen werden über die Zweidrahtleitung von dem Messwertempfänger mit elektrischer Energie versorgt und weisen dazu eine Diode als Schalter und einen Energiespeicher auf.

In der Offenlegungsschrift WO 90/01245 wird eine Adressieranordnung mit einem Adressiergenerator sowie daran angeschlossenen Adressenleitern beschrieben. Neben dem Adressenleiter ist noch ein Informationsleiter und wenigstens ein Versorgungsleiter vorgesehen, die zusammen ein Kabel bilden. Das Kabel verbindet eine Vielzahl von Schaltstellen, die Schaltstufen enthalten, die an einen Informationsleiter angeschlossen sind. Diese Schaltstelle beinhaltet weiterhin einen Adressierdetektor, der die Schaltstufen betätigt. Der Adressiergenerator gibt nur ein Standardsignal ab, das über ein Impedanzglied zusammen mit der Kabellänge hinsichtlich eines Parameters verändert wird, so dass nach dem Schalten der ersten Schaltstufe und dem Informationsaustausch über eine zweite Schaltstufe mit dem gleichen Standardsignal die Schaltstelle der nächsten Zelle angewählt werden kann.

Die Patentschrift GB-A-1 507 609 beschreibt ein paralleles BUS-System, bei dem über das BUS-System angeschlossene BUS-Stationen mit Energie versorgt werden.

Die Patentschrift US-A-4 209 666 beschreibt ein BUS-System, bei dem das BUS-System als ein Ring ausgebildet ist und Schalter in den BUS-Stationen vorhanden sind, die zur Isolation und Identifikation von Kurzschlüssen nach Masse dienen.

### Vorteile der Erfindung

Die erfindungsgemäße Slavestation nach der Gattung des unabhängigen Patentanspruchs hat demgegenüber den Vorteil, daß nicht alle Slavestationen gleichzeitig mit der Vorsorgungsspanung verbunden sind. Die Initialisierung des BUS-Systems erfolgt daher sukzessiv nacheinander für jede Slavestation einzeln, so daß die BUS-Leitungen nicht mit großen Strömen belastet werden. Weiterhin kann so jede Slavestation unabhängig von den anderen Slavestationen initialisiert werden, wodurch auftretende Fehler besonders einfach den einzelnen BUS-Stationen zugeordnet werden können. Es wird somit bei der Initialisierung schnell und einfach erkannt, ob das BUS-System voll funktionsfähig ist und wenn Fehler auftreten wo diese sind. Das erfindungsgemäße Verfahren nach der Gattung des unabhängigen Patentanspruchs ist insbesondere geeignet, einen Fehler im BUS-System festzustellen und durch geeignete Maßnahmen zumindest die Funktion eines Restsystems zu gewährleisten.

Durch die in den abhängigen Patentansprüchen aufgeführten Maßnahmen sind Fortbildungen und Verbesserungen der Slavestation, des BUS-Systems oder das Verfahren zum Betreiben eines BUS-Systems möglich. Durch die Verwendung eines Testschalters mit beschränkten Stromfluß können die nach der Slavestation liegenden Leitungen bzw. nachfolgenden Slavestationen auf einen Kurzschluß hin untersucht werden. Für die Speicherung von großen Energiemengen kann ein Arbeitsenergiespeicher vorgesehen werden, der ebenfalls über die BUS-Leitungen aufladbar ist. Die laufende Energie zum Betrieb der Slavestation wird ebenfalls den elektrischen Spannungen auf den BUS-Leitungen entnommen. In Abhängigkeit von Nachrichten, die über die BUS-Leitungen gesandt werden, können die Slavestationen angesteuert werden, um vorgegebene Handlungen auszulösen. Weiterhin kann die Masterstation Nachrichten aussenden, durch die die Slavestationen zu einer Rekonfiguration veranlaßt werden. Dazu werden zunächst die Verbindungsschalter wieder geöffnet. Bei können die einzelnen Adressen auch von der Masterstation vergeben werden. Die dazu notwendige Logik kann besonders gering gehalten werden, da jeweils nur eine einzelne Slavestation initialisiert wird. Während der Initialisierung oder danach können die Slavestationen Rücksignale an die Masterstation aussenden, um so ihre Funktionsfähigkeit zu bestätigen. Bei einer Ringstruktur kann vorgesehen werden, daß Nachrichten zu beiden Seiten des Rings eingespeist werden. Die einzelnen Slavestationen werden so auch dann noch erreicht, wenn zwischen zwei Stationen oder in einer Slavestation eine Störung vorliegt. Die Auswertung des Stromflusses beim Betrieb des BUS-Systems kann einen Hinweis auf eine mögliche Störung geben.

### Zeichnungen

Ausführungsbeispiele der Erfindung sind in den Zeichnungen dargestellt und in der nachfolgenden Beschreibung näher erläutert. Es zeigen die Figur 1 ein ersten Beispiel für ein BUS-System mit Masterstation und Slavestationen, Figur 2 eine Slavestation, Figur 3 einen Stromsensor, Figur 4 ein weiteres Ausführungsbeispiel für ein BUS-System, Figur 5 eine detailliertere Darstellung einer Slavestation und die Figuren 6, 7 und 8 weitere Ausführungsbeispiele für Bussysteme.

### Beschreibung

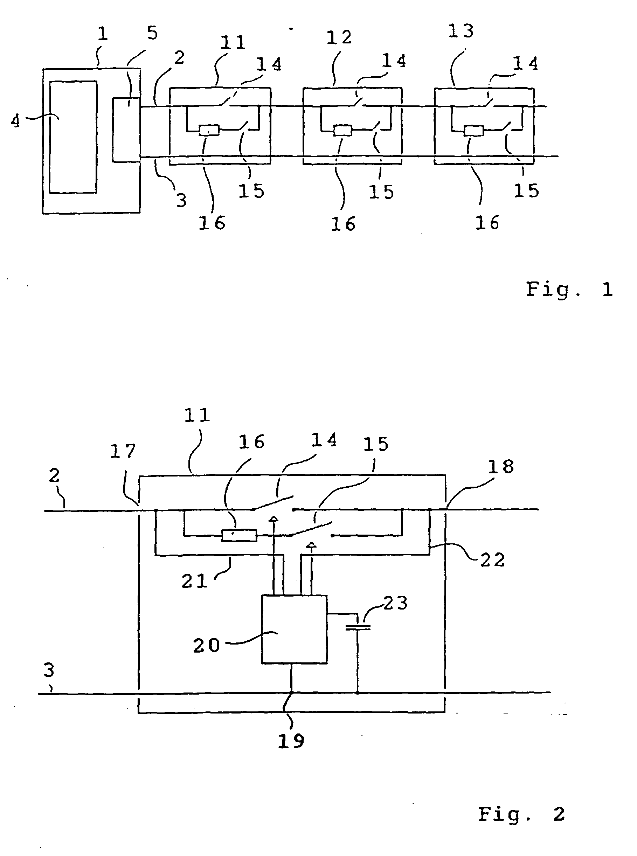

In der Figur 1 wird ein BUS-System mit einer Masterstation 1 und mehreren Slavestationen 11, 12, 13 gezeigt, die durch zwei BUS-Leitungen 2 und 3 miteinander verbunden sind. Die Masterstation 1 weist eine Steuerlogik 4 und eine Schnittstelle 5 auf. Jede der drei gezeigten Slavestationen 11, 12, 13 weist jeweils einen Verbindungsschaltung 14 und einen Testschalter 15 auf. In Reihe zum Testschalter 15 ist eine Strombegrenzung 16 geschaltet.

Durch die Steuerlogik 4 wird die Masterstation 1 gesteuert. Bei einer derartigen Steuerlogik kann es sich beispielsweise um einen Mikroprozessor mit einem Speicher handeln, wobei im Speicher ein entsprechendes Programm eingeschrieben ist. Durch die Steuerlogik 4 erfolgt dann eine Ansteuerung der Schnittstelle 5, wobei in der Schnittstelle 5 eine Umsetzung der Befehle der Steuerlogik 4 auf die entsprechenden BUS-Pegel, d. h. entsprechende Strom- oder Spannungssignale, die auf die BUS-Leitungen 2 oder gegeben werden erfolgt. Durch die BUS-Leitungen 2 und 3 ist die Masterstation 1 mit den Slavestationen 11, 12, 13 elektrisch verbunden, so daß der Master durch entsprechende elektrische Signale (Strom- oder Spannungssignale) Nachrichten an die Slavestationen 11, 12, 13 versenden kann oder gegebenenfall Nachrichten von den Slavestationen 11, 12, 13 empfangen kann.

In der Figur 2 wird eine Slavestation 11 der Figur 1 detaillierter dargestellt. Die anderen Slavestationen 12, 13... sind ebenso aufgebaut.Die von der Masterstation 1 ausgehende BUS-Leitung 2 ist mit einem ersten Anschluß 17 der Slavestation 11 verbunden. Im Inneren der Slavestation 11 ist der Anschluß 17 über den Verbindungsschalter 14 mit einem zweiten Anschluß 18 verbindbar, wobei dann die BUS-Leitung 2, die weiter zur Slavestation 12 führt, an diesen zweiten Anschluß 18 angeschlossen ist. Weiterhin sind in der Slavestation 11 der erste Anschluß 17 und der zweite Anschluß 18 noch über den Testschalter 15 elektrisch miteinander verbindbar. Durch in Reihe zum Testschalter 15 geschaltete Strombegrenzung 16 wird der dabei fließende Strom jedoch begrenzt. Die Strombegrenzung 16 ist hier der Einfachheit halber als Widerstand dargestellt. Es sind jedoch auch alle anderen Stromquellen mit einem begrenzten Strom denkbar. Weiterhin weist die Slavestation 11 eine Steuerlogik 20 auf, die durch Leitungen 21 und 22 mit den Anschlüssen 17 und 18 und somit mit der BUS-Leitung 2 verbunden ist. Weiterhin ist ein Energiespeicher vorgesehen, der hier als Kapazität ausgebildet ist und zwischen der Steuerlogik 20 und der BUS-Leitung 3 angeordnet ist.

In einem normalen Betriebszustand sind die Schalter 14 aller Slave-BUS-Stationen 11, 12, 13 geschlossen, so daß die jeweiligen Eingänge 17 und 18 der einzelnen Slave-BUS-Stationen miteinander kurzgeschlossen sind. Es liegt somit an allen BUS-Stationen, d. h. sowohl der Masterstation 1 wie auch den Slavestationen 11 bis 13 an der BUS-Leitung 2 die gleiche elektrische Spannung an. Gleiches gilt für die BUS-Leitung 3. Dabei wird ein eventueller Spannungsabfall über die Länge der BUS-Leitungen 2, 3 vernachlässigt. In diesem Betriebszustand ist es nun so, daß die Masterstation 1 zwischen den BUS-Leitungen 2 und 3 eine Spannungsdifferenz aufrecht erhält und daß die Slavestationen 11 bis 13 die für ihren Betrieb benötigte elektrische Energie aus dieser Spannungsdifferenz beziehen. Zum Senden von Nachrichten werden elektrische Signale über die BUS-Leitungen 2, 3 geschickt, die beispielsweise in einem Strom oder einem Spannungssignal bestehen können. Damit dabei die Energieversorgung der Slavestationen nicht gestört oder unterbrochen wird, weist jede Slavestation einen Energiespeicher, beispielsweise die in der Figur 2 gezeigte Kapazität 23 auf, die unabhängig von der auf den BUS-Leitungen 2, 3 aniliegenden Signalen eine Funktion der Logikschaltung 20 der Slavestationen gewährleistet. Da die Energieversorgung der Slavestationen über die BUS-Leitungen erfolgt, müßte zum Aufladen dieser Energiespeicher bei einer ersten Inbetriebnahme ein sehr großer Strom über die BUS-Leitungen 2, 3 fließen. Dies ist insbesondere der Fall, wenn die im Energiespeicher gespeicherte Energie relativ groß sein muß um beispielsweise damit noch eine elektrische Aktion auslösen zu können. Eine derartige elektrische Aktion, die einen relativ großen Energiespeicher erfordert, ist beispielsweise dadurch gegeben, wenn die Slavestationen den Treibsatz eines Airbag-Systems mittels eines Zündstroms auslösen sollen. Die in den Figuren 1 und 2 gezeigten Slavestationen sind nun in der Lage, ihre jeweiligen Energiespeicher bei einer ersten Inbetriebnahme oder Initialisierung des BUS-Systems sukzessive nacheinander aufzuladen, so daß der in diesem Betriebszustand über den BUS fließende Strom gering gehalten wird. Dies wird nun anhand der Figur 2 erläutert.

Bei der ersten Inbetriebnahme oder Initialisierung des BUS-Systems sind zunächst alle Verbindungsschalter 14 und alle Testschalter 15 geöffnet, so daß die ersten und zweiten Anschlüsse der Slave-BUS-Stationen elektrisch nicht miteinander verbunden sind. Die BUS-Leitung 2 ist somit in jeder Slavestation 11, 12, 13 unterbrochen. Wenn nun von der Masterstation 1 eine elektrische Spannungsdifferenz zwischen den BUS-Leitungen 2 und 3 angelegt wird, so liegt diese Spannungsdifferenz zunächst nur am Eingang 17 der ersten Slavestation 11 an, die unmittelbar auf die Masterstation 1 folgt. Da die Logikschaltung 20 der Slavestation 11 über die Leitung 21 mit dem Anschluß 17 verbunden ist, wird diese Logikschaltung mit elektrischer Energie versorgt und kann somit die notwendigen Initialisierungsschritt zur Initialisierung der ersten Slavestation 11 vornehmen. Zunächst wird die Logikschaltung 20 den Energiespeicher 23 aufladen um sicherzustellen, daß genügend Energie zur Versorgung der Logikschaltung 20 zur Verfügung steht. Dies kann auch dadurch erfolgen, daß der als Kapazität ausgebildetet Energiespeicher 23 fest mit der Leitung 21 und der BUS-Leitung 3 verbunden ist. Es können auch noch weitere Energiespeicher vorgesehen sein, die von der Logik 20 nur bedarfsweise bei der Initialisierung zwischen die BUS-Leitungen 2 und 3 geschaltet werden. Danach kann die Logikschaltung 20 dann weitere Initialisierungsschritte der Slavestation 11 vornehmen. Beispielsweise kann die Logikschaltung 20 dann ihrerseits ein Signal zwischen den BUS-Leitungen 2 und 3 erzeugen und so ein Signal an die Masterstation 1 senden. Dieses Lebenssignal oder Acknowledge teilt dann der Masterstation 1 mit, daß die erste Slavestation 11 initialisiert wurde. Die Masterstation 1 kann kann diese Information speichern. Weiterhin ist es in dieser Phase der Initialisierung möglich, daß die Masterstation 1 der ersten BUS-Station 11 eine Adresse zuweist, indem eine entsprechende Nachricht über den BUS gesandt wird. Da die nachfolgenden Slavestationen 12, 13 elektrisch noch von der Masterstation 1 getrennt sind, besteht keine Gefahr, daß diese Adresse fehlerhaft zugewiesen wird. Die Adresse kann aber natürlich von vorne herein in einem Speicher der Logik 20 abgelegt sein.

Nachdem die Steuerlogik 20 der ersten Slavestation 11 alle für die Initialisierung notwendigen Schritte abgearbeitet hat, löst sie dann ein Schaltsignal aus, um den Testschalter 15 zu schließen. Durch diesen Testschalter 15 wird dann der Anschluß 17 elektrisch mit dem Anspruch 18 verbunden, wobei der dabei fließende Strom jedoch durch die Strombegrenzung 16 begrenzt wird. Die BUS-Leitung 2 ist somit elektrisch durch die erste Slavestation 11 hindurch mit der zweiten Slavestation 12 verbunden, wobei jedoch der fließende Strom begrenzt ist. Da zunächst der Energiespeicher 23 der Slavestation 12 geladen werden muß, bleibt dabei die Spannung am zweiten Anschluß 18 der Slavestation 11 hinter der am Anschluß 17 anliegenden Spannung zurück, da der Stromfluß über den Testschalter 15 durch die Spannungsbegrenzung 16 beschränkt ist. Wenn dann der Energiespeicher 23 der nachfolgenden Slavestation 12 geladen ist, wird die elektrische Spannung am zweiten Anschluß 18 der Slavestation 11 den gleichen Wert annehmen wie am ersten Anschluß 17. Falls jedoch zwischen den Slavestationen 11 und 12 oder innerhalb der Slavestation 12 ein Kurzschluß zwischen den BUS-Leitungen 2 und 3 vorliegt, so wird die am Anschluß 18 anliegende Spannung nie den Wert der Spannung am Anschluß 17 erreichen. Erst wenn die Logikschaltung 20 feststellt, daß die Potentialdifferenz zwischen den beiden Anschlüssen 17 und 18 einen vorgegebenen Wert unterschreitet, wird sie ein Signal zum Schließen des Verbindungsschalters 14 auslösen durch den dann die Anschlüsse 17 und 18 niederohmig miteinander verbunden werden.

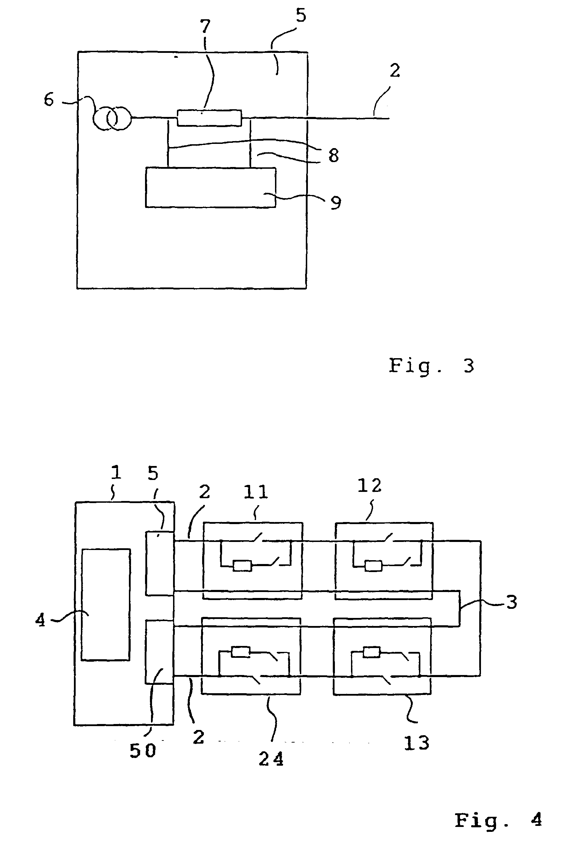

Wenn alle Slavestationen so aufgebaut sind wie in der Figur 2 dargelegt wird, so erfolgt die Initialisierung aller Slavestationen sukzessive nacheinander, d. h. zunächst wird die erste Slavestation 11 initialisiert, wenn diese Initialisierung abgeschlossen ist, wird die darauffolgende Slavestation 12 initialisiert und wenn diese Initialisierung abgeschlossen ist, wird die darauffolgende Slavestation 13 initialisiert. Bei jeder Teilinitialisierung wird dabei zunächst nur der Energiespeicher einer einzigen Slavestation aufgeladen, so daß die über die BUS-Leitungen 2, 3 fließenden Ströme gering sind. Weiterhin wird so sichergestellt, daß bei einem elektrischen Kurzschluß innerhalb oder zwischen Slavestationen die jeweils vor dem Kurzschluß liegenden Slavestationen noch ansprechsbar sind, da die unmittelbar vor dem Kurzschluß liegende Slavestation aufgrund der Spannungsunterschiede zwischen dem ersten und zweiten Anschluß 17, 18 nicht den niederohmigen Verbindungsschalter 14 schließen wird. Das so aufgebaute BUS-System ist somit fehlertolerant in dem Sinne, daß ein Kurzschluß zwischen den BUS-Leitungen 2, 3 nicht zu einem Totalausfall des BUS-Systems führt sondern nur die ausgehend von der Masterstation 1 nach dem Kurzschluß liegenden Slavestationen nicht mehr ereichbar sind. Bei der Initialisierung ist es wünschenswert, daß die Masterstation 1 eine Information darüber erhält, welche Slavestationen initialisiert und somit betriebsbereit sind. Wie bereits beschrieben wurde, kann dies dadurch erfolgen, daß die Slavestationen im Verlauf ihrer jeweiligen Teilinitialisierung ein Signal an die Masterstation einsenden mit dem die Betriebsbereitschaft der jeweiligen Slavestation signalisiert wird. Eine weitere Möglichkeit besteht darin, daß in der Schnittstelle 5 ein Stromsensor angeordnet ist, mit dem das Schließen des Testschalters 15 nachgewiesen wird. Ein derartiger Stromsensor wird in der Figur 3 gezeigt. Dazu ist in der Schnittstelle 5 eine Stromquelle 6 vorgesehen, die durch den Widerstand 7 mit der BUS-Leitung 2 verbunden ist. Über die Verbindungsleitungen 8 ist vor und nach dem Widerstand 7 ein Spannungsmesser 9 angeschlossen, durch den der Spannungsabfall über den Widerstand 7 nachgewiesen wird. Aufgrund des Spannungsabfalls am Widerstand 7 kann dann der in die BUS-Leitung 2 fließende Strom bestimmt werden. Kurz bevor eine initialisierte Slavestation das Signal zur Betätigung des Testschalters 15 gibt, ist der Stromfluß in der BUS-Leitung 2 gering, da der Energiespeicher der soeben initialisierten Slave-BUS-Station gefüllt ist. Nach dem Schließen des Testschalters 15 fließt zunächst ein hoher Strom, der im wesentlichen dem Maximalstrom der Strombegrenzung 16 entspricht, durch die BUS-Leitung 2, der dann durch den Stromsensor in der Schnittstelle 5 nachgewiesen werden kann. Dieses Stromsignal ist für die Masterstation 1 ein Zeichen, daß eine erste Slave-BUS-Station (beispielsweise die Station 11) gerade initialisiert worden ist und nun die Initialisierung der zweiten Slavestation (beispielsweise Station 12) erfolgt. Durch die Beobachtung der auf den BUS-Leitungen fließenden Ströme kann somit die Masterstation 1 feststellen, ob die Initialisierung aller Slavestationen 11, 12, 13 erfolgt oder ob evtl. ein Fehler in einer dieser Stationen vorliegt.

Nach der erfolgten Initialisierung aller Slavestationen 11 bis 13 befindet sich das BUS-System im normalen Betriebszustand, d. h. es können nun Nachrichten zwischen den einzelnen BUS-Stationen ausgetauscht werden. Insbesondere kann die Masterstation 1 Befehle an die Slavestationen 11 senden mit denen Aktionen der einzelnen Slavestationen ausgelöst werden. Das hier gezeigte BUS-System kann beispielsweise zur Auslösung von Sicherheitssystemen wie beispielsweise Mehrfachairbag-Systemen und Gurtstraffern in einem Kraftfahrzeug verwendet werden. Die Nachricht würde dann einfach Ansteuerbefehle für die unterschiedlichen Slavestationen beinhalten. Bei derartigen Systemen ist es wünschenswert, daß auch bei einem Teilausfall des BUS-Systems die anderen BUS-Stationen noch ansprechbar sind. Wenn somit bei der Initialisierung, die beispielsweise bei jedem erneuten Start des Kraftfahrzeugs vorgenommen werden kann, festgestellt wird, daß beispielsweise der Seitenairbag ausgefallen, so sollte trotzdem der Frontalairbag noch auslösbar sein. Weiterhin ist es in diesem Falle wünschenswert, daß die Masterstation eine Information darüber erhält, daß der Seitenairbag nicht ansprechbar ist, um eine entsprechende Warnung an den Fahrer zu geben. Weiterhin muß auch sichergestellt werden, daß bei laufendem Betrieb ein Fehler im BUS-System erkannt wird. Als weitere Maßnahme kann daher hier vorgesehen werden, daß eine Rekonfigurierung des BUS-Systems erfolgt. Bei einer derartigen Rekonfigurierung handelt es sich um eine Initialisierung, bei der jedoch der Energiespeicher 23 der einzelnen Slavestationen 11, 12, 13 geladen bleibt. Für eine Rekonfigurierung wird von der Masterstation 1 ein Rekonfigurierungssignal ausgesendet, welches alle Slavestationen 11 zum Öffnen des Verbindungsschalters 14, und sofern die Testschalter 15 am Ende der Initialisierung nicht wieder geöffnet worden sind, zum Öffnen des Testschalters 15 veranlaßt. Danach rekonfiguriert sich dann das System indem zunächst die Slavestation 11 die gleichen Programmschleifen durchläuft wie bei der Initialisierung, wobei Ladung des Energiespeichers 23 entweder ausgelassen wird oder aber nur sehr kurz erforderlich ist. Danach wird diese erste Slavestation 11 dann wieder den Testschalter 15 schließen und es wird so überprüft, ob in der nachfolgenden Slavestation 12 oder zwischen der Slavestation 11 und der nachfolgenden Slavestation 12 ein Kurzschluß vorliegt. Da keine Zeit zum Aufladen der Energiespeicher 23 benötigt wird, kann die Rekonfiguration des BUS-Systems besonders schnell erfolgen. Eine Rückmeldung über die erfolgreiche Rekonfiguration der Slavestationen 11, 12, 13 an die Masterstation 1 kann jedoch nur durch eine aktive Maßnahme seitens der Slavestationen 11, 12, 13 erfolgen, da ein Stromsignal, das ja durch die Aufladung der Energiespeicher 23 verursacht wird, nicht mehr nachweisbar ist.

Die Initialisierung und Rekonfiguration des BUS-Systems ist besonders vorteilhaft, wenn das BUS-System als Ringstruktur ausgebildet ist, wie dies in der Figur 4 gezeigt wird. In der Figur 4 wird eine Masterstation 1 mit einer Steuerlogik 4 und einer Schnittstelle 5 gezeigt, wie sie bereits aus der Figur 1 bekannt sind. Zusätzlich weist die Masterstation 1 der Figur 4 jedoch noch eine weitere Schnittstelle 50 auf, die ebenfalls mit den BUS-Leitungen 2 und 3 verbunden ist. Die BUS-Leitungen 2 und 3 sind somit an ihren jeweiligen Enden mit einer der Schnittstellen 5 oder 50 verbunden, so daß zusammen mit der Masterstation 1 eine Ringstruktur gebildet wird. In diesem Ring sind zwischen den beiden Schntittstellen 5 und 50 die Slavestationen 11, 12, 13 und 24 angeordnet. Die einzelnen Slavestationen 11, 12, 13 und 24 entsprechen den Slavestationen wie sie aus der Figur 1 und 2 bereits bekannt sind. Bei der Initialisierung wird zunächst eine Initialisierung der einzelnen Slavestationen 11, 12, 13, 24 ausgehend von der Schnittstelle 5 vorgenommen, wie dies bereits zur Figur 1 beschrieben wurde. Die Schnittstelle 50 übernimmt hier zunächst nur reine Überwachungsfunktionen, indem überprüft wird, ob nach dem Anlegen einer Spannung zwischen den BUS-Leitungen 2 und 3 seitens der Schnittstelle 5 auch an der Schnittstelle 50 zwischen den BUS-Leitungen 2 und 3 eine Spannung anliegt. Wenn dies der Fall ist, wurden alle Slavestationen 11, 12, 13 und 24 initialisiert. Ausgehend von der Schnittstelle 5 wird dabei zunächst die Slavestation 11, dann Slavestation 12, dann die Slavestation 13 und dann die Slavestation 24 initialisiert. Da die Slavestationen nur bei erfolgreicher Initialisierung die Spannung durchschalten, ist somit das Vorliegen einer Spannungsdifferenz zwischen den BUS-Leitungen 2 und 3 an der Schnittstelle 50 ein Signal dafür, daß alle Slavestationen erfolgreich initialisiert wurden. Durch die Ringstruktur können hier jedoch nicht nur Kurzschlüsse zwischen den Leitungen erkannt werden, wie dies bei der Figur 1 der Fall ist, sondern es können auch Leitungsunterbrechungen erkannt werden. Beim Auftreten eines derartigen Fehlers kann dann mit Hilfe der zweiten Schnittstelle 50 versucht werden, doch noch alle Slavestationen zu erreichen. Als Beispiel sei hier jetzt davon ausgegangen, daß zwischen den beiden Slavestationen 12 und 13 ein Fehler aufgetreten ist, der sowohl in einer Unterbrechung der BUS-Leitungen 2, 3 wie auch in einem Kurzschluß der beiden BUS-Leitungen untereinander bestehen kann. Im Falle eines Kurzschlusses wird aufgrund der erhöhten Stromaufnahme in der Schnittstelle 5 der Fehler festgestellt. Im Falle eines Kurzschlusses wird der Fehler in der Schnittstelle 50 bemerkt, da dort dann keine Spannung mehr zwischen den BUS-Leitungen 2 und 3 anliegt. Um den Fehler zu kompensieren, wird nun die Schnittstelle 50 auch als Sendeschnittstelle aktiviert, d. h. die Schnittstelle 50 nimmt nun dieselben Funktionen wahr wie die Schnittstelle 5. Beide Schnittstellen 5, 50 liegen nun zwischen den BUS-Leitungen 2 und 3 Spannungen an, die zu einer Initialisierung oder Rekonfigurierung der Slavestationen 11 und 24 führt. Nach erfolgreicher Initialisierung oder Rekonfigurierung der Slavestationen 11 und 24 liegen dann auch an den Slavestationen 12 und 13 entsprechende Spannungen an, so daß auch diese Slavestationen initialisiert oder rekonfiguriert werden. Diese beiden Slavestationen können jedoch die Spannung nicht zur nächsten Slavestation weiterschalten, da zwischen den beiden Stationen eine Leitungsunterbrechung oder ein Kurzschluß vorliegt. Die Masterstation 1 kann nun nach wie vor alle Slavestationen 11, 12, 13 und 24 ansprechen, indem die entsprechenden Nachrichten sowohl an die Schnittstelle 5 wie auch an die Schnittstelle 50 angelegt werden. Wenn die Slavestationen als lineare Struktur angeordnet wären, wie dies in der Figur 1 gezeigt wird, so ließen sich die Slavestationen 13 und 24 nicht mehr ansprechen. Die in Figur 4 gezeigte Struktur ist somit besonders sicher, da Fehler in besonders großem Maß repariert werden können. Um in einem Ring angeordnet zu werden, sind die einzelnen Slavestationen so ausgelegt; daß die Betriebsspannung sowohl von der einen wie auch der anderen Steite angelegt werden kann.

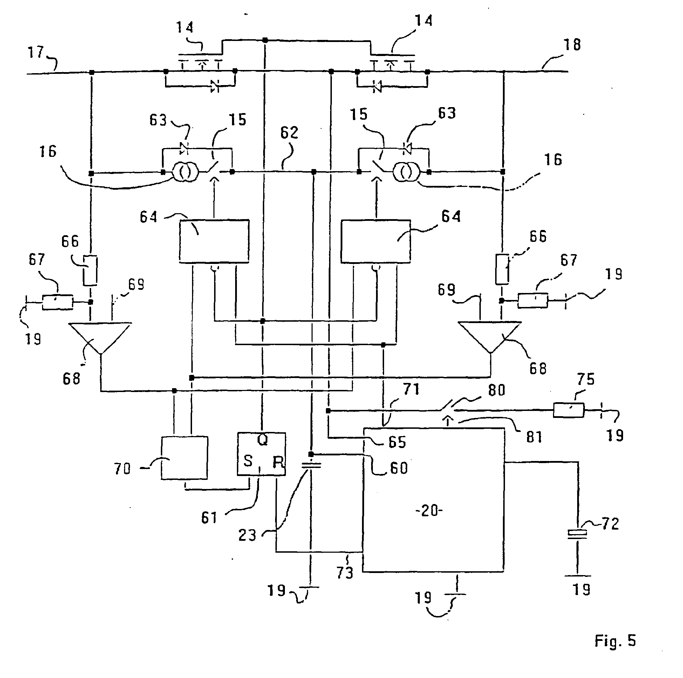

Eine Slave-BUS-Station, bei der die Versorgungsspannung auf beiden Seiten angelegt werden kann, wird in der Figur 5 gezeigt. In der Figur 5 wird eine Slavestation mit den Anschlüssen, die jeweils mit der BUS-Leitung 2 verbunden werden, gezeigt. Zwischen diesen beiden Anschlüssen 17 und 18 sind hier zwei Schalter 14 angeordnet, wobei der näher am Schalter 17 angeordnete Schalter als linker Schalter 14 und der näher zum Anschluß 18 angeordneter Schalter als rechter Schalter 14 bezeichnet wird. Da bei der Schaltung nach der Figur 5 mehrere Komponenten doppelt vorhanden sind, wird diese Unterscheidung zwischen rechter Komponente und linker Komponente weiter verwendet werden. Dabei ist mit linker Komponente immer die gemeint, die näher zum Anschluß 17 und mit rechter Komponente diejenige gemeint, die näher zum Anschluß 18 angeordnet ist. Die Schalter 14 sind als MOS-Transistoren ausgebildet, die jeweils eine parasitäre Diode parallel geschaltet haben. Wenn die Spannung am Anschluß 17 größer ist als am Anschluß 18, so ist die parasitäre Diode des linken Schalters 14 in Flußrichtung geschaltet, so daß diese Spannung nur mit dem rechten Schalter 14 geschaltet werden kann. Entsprechend ist der linke Schalter 14 als Schalter ausgebildet, mit dem eine Verbindung zwischen dem Anschluß 18 und 17 hergestellt werden kann, wenn die Spannung am Anschluß 18 die Spannung am Anschluß 17 übersteigt. Zwischen dem rechten Schalter 14 und dem linken Schalter 14 ist ein Abgriff vorgesehen, der zu einem Signaleingang 60 der Steuerlogik 20 führt. Die Steuereingänge der Schalter 14 sind mit dem Ausgang eines Flip-Flop 61 verbunden. Wenn das Flip-Flop gesetzt ist, sind somit die Schalter 14 geschlossen und die beiden Anschlüsse 17 und 18 sind niederohmig miteinander verbunden. Wenn das Flip-Flop 61 nicht gesetzt ist, sind die Schalter 14 geöffnet und die Anschlüsse 17 und 18 sind nicht durch die Schalter 14 miteinander verbunden. Weiterhin sind die Anschlüsse 17 und 18 noch durch eine Testleitung 62 verbunden, wobei in der Testleitung 62 zwei Testschalter 15 vorgesehen sind. In Reihe zu jedem dieser Testschalter ist eine Strombegrenzung 16 geschaltet, die hier der Einfachheit halber als Stromquelle dargestellt ist. Wie bereits ausgeführt, besteht die einfachste Version einer derartigen strombegrenzenden Schaltung in einem entsprechenden Widerstand. Der rechte und der linke Testschalter 15 sind jeweils durch eine Trenndiode 63 überbrückt. Durch diese Trenndioden 63, die gegeneinander gepolt sind, wird wieder sichergestellt, daß der linke Testschalter 15 geeignet ist, einen Teststrom zu schalten, wenn die Spannung am Anschluß 18 größer ist als am Anschluß 17, während der rechte Testschalter 15 zum Schalten eines Teststromes vorgesehen ist, wenn die Spannung am Anschluß 17 größer ist als am Anschluß 18. Die Ansteuerung der Testschalter 15 erfolgt über den Ausgang von Und-Gliedern 64. Zwischen den beiden Testschaltern bzw. den Trenndioden 63 ist ein Mittelabgriff vorgesehen, der mit dem Energiespeicher 23 verbunden ist. Der Energiespeicher 23 ist hier als Kapazität ausgebildet, die mit ihrem anderen Anschluß mit dem Anschluß 19 verbunden ist und somit für die Verbindung mit der BUS-Leitung 3 vorgesehen ist. Weiterhin ist der Energiespeicher 23 mit dem Versorgungsspannungseingang 65 der Steuerlogik 20 verbunden. Wenn also zwischen dem Anschluß 17 und 19 oder dem Anschluß 18 und 19 eine Spannung anliegt, wird die Steuerlogik 20 mit Versorgungsspannung versorgt. Der Energiespeicher 23 dient dazu, Spannungsschwankungen zu kompensieren und so immer eine gleichmäßige Energieversorgung der Steuerlogik 20 zu gewährleisten. Dies gilt insbesondere bei kurzfristigen Spannungsschwankungen wie sie bei der Übertragung von Nachrichten über die BUS-Leitungen auftreten. Weiterhin sind die Anschlüsse 17 und 18 jeweils mit einem Spannungsteiler gegen den Anschluß 19 geschaltet, wobei zwischen den beiden Teilerwiderständen 66, 67 der Eingang eines Komparators angeschlossen ist. Der Komparator vergleicht dabei diese Spannung mit einer Vergleichsspannung, die am Anschluß 69 des Komparators anliegt. Diese Vergleichsspannung kann beispielsweise von einer Gleichspannungsversorgung der Steuerlogik 20 zur Verfügung gestellt werden. Die Ausgänge der Komparatoren 68 sind jeweils mit den beiden Eingängen eines Und-Gliedes 70 verbunden. Der Ausgang des Und-Gliedes 70 ist mit dem Set-Eingang des Flip-Flop 61 verbunden. Dieser Aufbau von Spannungsteilern 66, 67, Komparatoren 68, Und-Glied 70 und Flip-Flop 71 bewirkt, daß ein Spannungsvergleich zwischen den beiden Anschlüssen 17 und 18 vorgenommen wird. Dabei sind die an den Eingängen 69 anliegenden Vergleichsspannungen so gewählt, daß die Komparatoren 68 die Signale abgeben, wenn die Spannungen an den Anschlüssen 17 und 18 sich jeweils den Soll-Spannungen auf dem BUS annähern. Wenn beispielsweise vorgesehen ist, daß von der Masterstation 1 eine Spannung von 24 Volt zwischen den Leitungen 2 und 3 angelegt wird, so werden die Schaltungen so ausgelegt, daß die Komparatoren 68 ein Signal abgeben, wenn die Spannungen an den Anschlüssen 17 und 18 20 Volt überscheiten. Wenn nur auf der einen Seite, beispielsweise dem linken Anschluß 17 eine derartige Spannung anliegt, so wird zunächst nur der linke Komparator 68 durchgeschaltet, so daß nur ein Eingangssignal am Und-Glied anliegt. Das Und-Glied 70 wird somit kein Ausgangssignal produzieren. Dies erfolgt erst dann, wenn auch am Anschluß 18 eine entsprechende Spannung anliegt und dann der rechte Kompensator 68 dies anzeigt. Da dann beide Eingänge des Und-Glieds 70 aktiviert sind, wird das Und-Glied auch ein Signal ausgeben, welches dann auf den Set-Eingang des Flip-Flops 61 gegeben wird. Dadurch wird das Flip-Flop 61 gesetzt, so daß dann die Schalter 14 durchgeschaltet werden. Die Schalter 14 werden somit automatisch durchgeschaltet, wenn die an den Anschlüssen 17 und 18 anliegende Spannung sich der durch die Masterstation 1 vorgegebenen Spannung annähert.

Wenn von der Masterstation 1 die Spannung zunächst nur an einer Seite angelegt wird, beispielsweise am Anschluß 17, so kann die Slavestation durch die Testschalter 15 die Spannung am anderen Anschluß anheben. Wenn am Anschluß 17 das Potential anliegt, so ist der linke Komparator 68 geschaltet, wobei der Ausgang dieses Komparators mit einem Eingang des rechten Und-Gliedes 64 verbunden ist. Weiterhin ist ein Anschluß des rechten Und-Gliedes 64 mit dem Ausgang des Flip-Flop 61 verbunden, wobei dieses Signal jedoch negiert wird. Ein weiterer Eingang des Und-Gliedes ist mit einem Steueranschluß 71 der Steuerlogik 20 verbunden. Das rechte Und-Glied 64, durch das der rechte Testschalter 15 geschaltet wird, gibt somit nur dann ein Signal zur Betätigung des rechten Testschalters 15, wenn am Anschluß 17 eine ausreichend hohe Spannung anliegt (Eingang der mit dem linken Komparator 68 verbunden ist), wenn die Schalter 14 offen sind (negierte Verbindung zum Flip-Flop 61) und wenn ein entsprechendes Steuersignal von der Steuerlogik 20 an dem Steueranschluß 71 ausgegeben wird. Ein entsprechendes Steuersignal wird von der Steuerlogik 20 erst dann ausgegeben, wenn die Initialisierung oder Rekonfigurierung der hier gezeigten Slavestation abgeschlossen ist. Dies erfordert, daß der Energiespeicher 23 ausreichend aufgeladen ist, daß die Steuerlogik 20, sofern dies vorgesehen ist, eine Adresse von der Masterstation 1 erhalten hat und daß ein weiterer Arbeitsenergiespeicher 72 aufgeladen wurde. Dieser weitere Arbeitsenergiespeicher 72 ist hier als Elektrolyt-Kondensator vorgesehen, d. h. ein Kondensator, der eine große Energiemenge aufnehmen kann. Ein derartiger Kondensator ist beispielsweise in der Lage, eine Energiemenge aufzunehmen, die zur Zündung eines Airbag-Systems oder eines pyroelektrischen Gurtstraffers geeignet ist. Sofern für die Initialisierung noch andere Maßnahmen vorgesehen sind, so wird die Steuerlogik 20 diese Maßnahmen zunächst beenden und erst danach ein entsprechendes Signal an den Steueranschluß 71 ausgeben. Der Arbeitsenergiespeicher 72 kann geladen werden, indem in der Steuerlogik 20 ein entsprechender, hier nicht dargestellter, Schalter geschaltet wird, mit dem der Elektrolyt-Kondensator 72 zwischen dem Anschluß 17 oder 18 und dem Anschluß 19 geschaltet wird. Wenn so alle Eingänge des Und-Glieds 64 aktiviert sind, wird vom Und-Glied 64 ein entsprechendes Ausgangssignal ausgegeben und der Testschalter 15 geschlossen. Da nun ein begrenzter Stromfluß zwischen den Anschlüssen 17 und 18 möglich ist, wird auch die nachfolgende Slavestation mit einer Versorgungsspannung versorgt. Zunächst bleibt jedoch die am Anschluß 18 anliegende Spannung hinter der am Anschluß 17 anliegenden Spannung zurück, da bei der nachfolgenden Slavestation zunächst der Energiespeicher 23 und evtl. noch ein entsprechender Arbeitsenergiespeicher 72 geladen wird. Erst wenn sich der Strombedarf der nachfolgenden Slavestation verringert, kann das Potential am Anschluß 18 ansteigen und zu einem Durchschalten der Schalter 14 führen. Der Testschalter 15 wird dabei wieder geöffnet, da der negierte Eingang des Und-Glieds 64 wieder zurückgesetzt wird.

Die Steuerlogik 20 weist noch einen Rekonfigurationsausgang 73 auf, mit dem das Flip-Flop 61 zurückgesetzt (Reset) werden kann. Dadurch werden die Schalter 14 wieder geöffnet. Die Steuerlogik 20 gibt ein entsprechendes Signal am Rekonfigurationsausgang 73 aus, wenn es von der Masterstation ein Rekonfigurationssignal erhält. Auf diese Weise kann die Masterstation 1 eine Rekonfiguration des BUS-Systems auslösen. Die Masterstation wird nach einem derartigen Signal wieder eine Spannung zwischen die BUS-Leitungen 2, 3 anlegen, so daß dann beispielsweise am Anschluß 17 wieder ein hohes Potential anliegt. Der nicht mehr mit der Spannungsversorgung verbundene Anschluß 18 wird dann über den Spannungsteiler 66, 67 auf eine geringere Spannung gezogen, so daß die nachfolgende Slavestation zunächst von der Masterstation getrennt ist. Die hier gezeigte Slavestation kann dann wieder Nachrichten mit der Masterstation 1 austauschen, beispielsweise eine neue Adresse zugewiesen bekommen oder dergleichen. Da bei der Rekonfiguration die Energiespeicher 23 und 72 nicht entladen werden, kann dieser Vorgang sehr schnell erfolgen, so daß die Rekonfiguration des BUS-Systemes sehr schnell vor sich geht. Wenn nach der Rekonfiguration die Steuerlogik 20 ein entsprechendes Signal an den Steueranschluß 71 ausgibt, so wird sich die Spannung am Anschluß 18 sehr schnell an die Spannung am Anschluß 17 annähern, da keine Energiespeicher geladen werden müssen.

Weiterhin weist die Steuerlogik (20) noch einen Kurzschlußschalter (80) auf, der von einem Steueranschluß (81) der Steuerlogik (20) angesteuert wird. Durch diesen Kurzschlußschalter (80) können die BUS-Leitungen (2 und 3) d. h. die Anschlüsse (17, 18 und 19) miteinander über einen strombegrenzenden Widerstand 75 kurzgeschlossen werden. Die Slavestation hat so die Möglichkeit, Signale zurück zur Masterstation 1 zu übertragen.

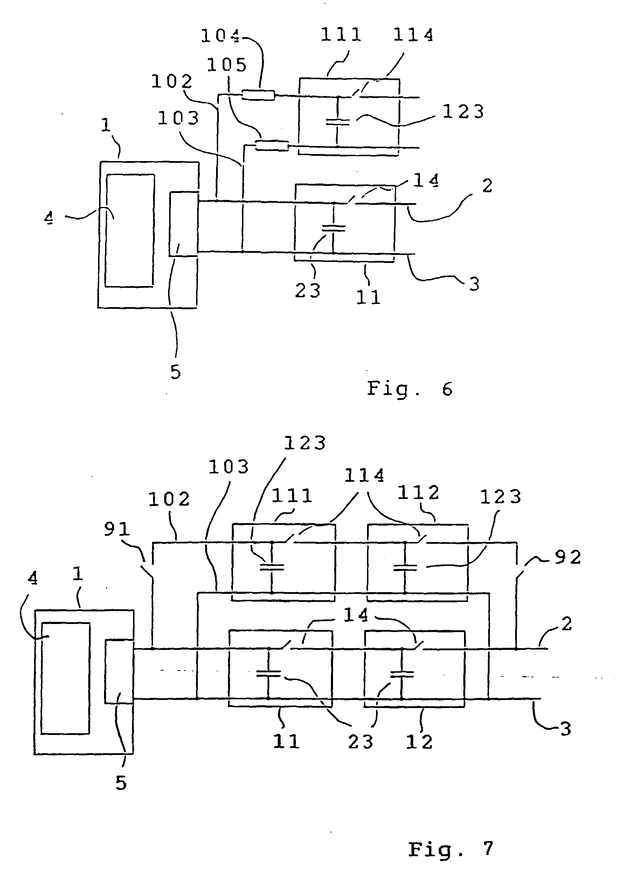

In der Figur 6 wird ein weiteres Ausführungsbeispiel des efindungsgemäßen BUS-Systems gezeigt. Die Masterstation 1 mit der Steuerlogik 4 und der Schnittstelle 5 und die damit durch die BUS-Leitungen 2, 3 verbundene Slavestation 11 mit dem Schalter 14 und dem Energiespeicher 23 entsprechen wieder dem aus der Figur 1 und 2 bekannten Aufbau. Es ist jedoch noch eine weitere Slavestation 111 vorgesehen, die über Widerstände 104 und 105 mittels weiterer BUS-Leitungen 102 und 103 mit den BUS-Leitungen 2 und 3 verbunden ist. Die Anordnung ist dabei so gewählt, daß eine Parallelschaltung der weiteren Slavestation 111 parallel zur Slavestation 11 erfolgt. Die weitere Slavestation 111 ist wie die bereits beschriebenen Slavestationen aufbaut wobei aus Gründen der Übersichtlichkeit in der Figur 6 nur der Verbindungsschalter 114 und der Energiespeicher 123 der weiteren Slavestation 111 dargestellt ist. Ebenso ist bei der Slavestation 11 nur der Verbindungsschalter 14 und der Energiespeicher 23 dargestellt.

Durch die Parallelschaltung liegen an den Slavestationen 11 und 111 die gleichen elektrischen Spannungen an, die von der Schnittstelle 5 auf die BUS-Leitungen 2 und 3 und somit auch auf die weiteren BUS-Leitungen 102 und 103 gegeben werden. Da jedoch durch die Widerstände 104, 105 der Stromfluß begrenzt wird, wird der als Kondensator ausgebildete Energiespeicher 123 bei gleicher Kapazität wie der Energiespeicher 23 langsamer geladen, so daß nach dem Anlegen der elektrischen Spannungen an die BUS-Leitungen 2, 3 die Slavestation 11 schneller initialisiert wird als die weitere Slavestation 111. Durch diese Maßnahme wird somit wieder eine Entzerrung der Initialisierung der beiden Stationen bewirkt, so daß die Schnittstelle 5 nicht den Strom zur gleichzeitigen Ladung von zwei Energiespeichern aufbringen muß. Weiterhin kann die Anordnung nach der Figur 6 besonders vorteilhaft genutzt werden wenn während der Initialisierung jeder Slavestation von der Masterstation 1 eine Adresse zugewiesen wird. Die Masterstation 1 kann somit eine erste Adresse fürdie Slavestation 11 vergeben, wenn diese mit der Initialisierung weit genug fortgeschritten ist und die Initialisierung der weiteren Slavestation 111 noch nicht so weit ist, daß diese weitere Slavestation 111 zur Aufnahme einer Adresse bereit ist. Wenn in die Slavestation 11 bereits eine Adresse eingeschrieben ist und dann die weitere Slavestation 111 so weit initialisiert ist, daß auch dort eine Adresse eingeschrieben kann, kann die Masterstation 1 dann eine weitere Adresse für die weitere Slavestation 111 ausgeben. Die Zeiten zu denen die Masterstation 1 die Adresse für die Slavestation 11 und danach die weitere Adresse für die weitere Slavestation 111 ausgibt, können entweder fest vorgegeben sein aufgrund der Geschwindigkeit mit der die Energiespeicher 23, 123 geladen werden oder aber sie können durch Rückmeldungen der Slavestationen 11, 111 oder durch Beobachtung des Stromflusses in der Schnittstelle 5 erfolgen. Weiterhin können die weiteren BUS-Leitungen 102, 103 nicht nur zwischen der Masterstation 1 und einer ersten nachfolgenden Slavestation 11 angeschlossen werden, sondern es ist beispielsweise auch ein Anschluß zwischen zwei Slavestationen möglich, beispielsweise den Slavestationen 12 und 13 der Figur 1.

In der Figur 7 wird ein weiteres Ausführungsbeispiel gezeigt mit einer Masterstation 1 und zwei Slavestationen 11 und 12, die wieder dem bekannten Aufbau nach der Figur 1 entsprechen. Weiterhin sind noch zwei weitere Slavestationen 111 und 112 vorgesehen, die mit weiteren BUS-Leitungen 102 und 103 verbunden sind. Die weiteren Slavestationen 111 und 112 entsprechen wieder den bereits bekannten Slavestationen, wobei zur Übersichtlichkeit nur die Verbindungsschalter 114 und die Energiespeicher 123 dargestellt sind. Die weiteren Slavestationen 111 und 112 sind bezüglich der weiteren BUS-Leitungen 102, 103 genauso angeordnet wie die Slavestationen 11 und 12 bezüglich der BUS-Stationen 2 und 3. Weiterhin sind noch Schalter 91 und 92 vorgesehen, durch die die weitere BUS-Leitung 102 zwischen der ersten weiteren Slavestation 111 und der Masterstation 1 bzw. zwischen der zweiten weiteren Slavestation 112 und der BUS-Leitung 2 unterbrechbar ist. Wenn die Schalter 91, 92 geschlossen sind, sind die weiteren Slavestationen 11, 112 parallel zu den Slavestatione 11, 12 geschaltet. Bei der Initialisierung sind diese beiden Schalter 91 und 92 zunächst geöffnet, so daß die weiteren Slavestationen 111, 112 elektrisch von der Masterstation 1 getrennt sind. Es erfolgt dann in bereits beschriebener Weise eine Initialisierung der Slavestationen 11 und 12 und ggf. noch die Initialisierung weiteren Slavestationen, die unmittelbar an den BUS-Leitungen 2 und 3 angeschlossen sind. Wenn diese Initialisierung abgeschlossen ist, wird der Schalter 91 geschlossen und es erfolgt dann eine Initialisierung der ersten weiteren Slavestation 111 und wenn diese Initialisierung beendet ist, eine Initialisierung der nachfolgenden weiteren Slavestation 112. Danach wird der Schalter 92 geschlossen. Wenn die weiteren Slavestationen 111, 112 so ausgebildet sind wie in der Figur 5 gezeigt wird, so kann natürlich die Initialisierung auch dadurch erfolgen, daß der Schalter 92 geschlossen wird und dann zuerst die weitere Slavestation 112 initialisiert wird. Aufgrund der Schalter 91, 92 können so die weiteren Slavestationen 111, 112 und die Slavestationen 11, 12 einzeln nacheinander initialisiert werden, so daß der Ladestrom für die Energeispeicher gering ist und die Addressen einzeln vergeben werden können. Sofern gewünscht ist parallel angeordneten Slavestationen und weiteren Slavestationen gleiche Addressen zuzuordnen können die Schalter 91, 92 bei der Initialisierung des Bussystems auch geschlossen werden.

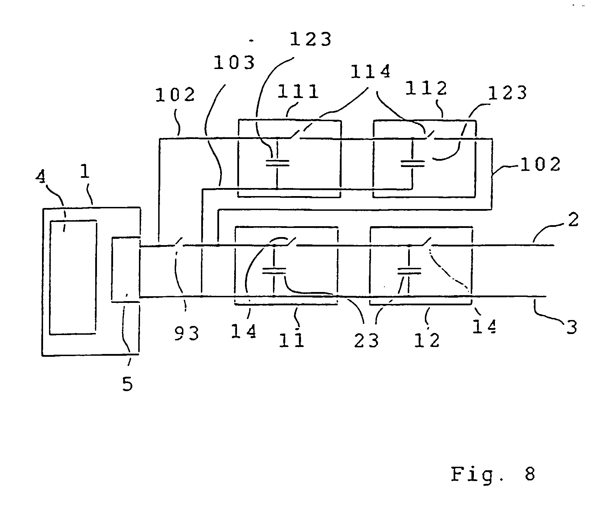

In der Figur 8 wird ein weiteres Ausführungsbeispiel für ein BUS-System gezeigt, bei dem eine Masterstation 1 und Slavestationen 11, 12 vorgesehen sind, die durch BUS-Leitungen 2, 3, wie bereits aus der Figur 1 bekannt ist, miteinander verbunden sind. In der BUS-Leitung 2 ist jedoch ein Schalter 93 vorgesehen, wobei vor dem Schalter ein Anschluß für eine weitere BUS-Leitung 102 und nach dem Schalter ein Anschluß für eine weitere BUS-Leitung 102 vorgesehen ist. Die BUS-Leitung 102 wird in bekannter Weise durch weitere Slavestationen 111 und 112 geführt, wobei diese weitere BUS-Leitung 102 jeweils durch die in den weiteren Slavestationen 111 und 112 angeordneten Verbindungsschaltern 114 unterbrechbar bzw. verbindbar sind. Wenn der Schalter 93 geöffnet ist, so erfolgt zunächst die Initialisierung der weiteren Slavestationen 111 und 112 und durch die Rückführung der weiteren BUS-Leitung 102 auf einen Anschluß nach dem Schalter 93 anschließend die Initialisierung der Slavestationen 11 und 12. Es kann jedoch aber auch auf diese Rückführungsleitung verzichtet werden, wenn nach der Initialisierung der weiteren Slavestation 112 der Schalter 93 geschlossen wird. Es lassen sich so wieder eine Vielzahl von Slavestationen nacheinander initialisieren, ohne daß dabei aufwendige Verkabelungen vorgenommen werden müssen.

## Patentansprüche

1. Slave-Station (11, 12, 13, 24) für ein BUS-System mit einer Master-Station (1) und mit mindestens zwei solchen, über zwei Busleitungen (2, 3) verbundenen Slave-Station (11, 12, 13, 24), wobei die Slave-Station (11 12, 13, 24) einen ersten und einen zweiten Anschluss (17, 18) aufweist, der jeweils mit einer Busleitung (2) verbindbar ist, wobei die Slave-Station (11, 12, 13, 24) einen Verbindungsschalter (14) und einen Energiespeicher (23) aufweist, wobei der Verbindungsschalter (14) zwischen dem ersten und dem zweiten Anschluss (17, 18) angeordnet ist, **dadurch gekennzeichnet, dass** die Slave-Station (11, 12, 13, 24) eine Logikschaltung (20) aufweist, die derart konfiguriert ist, dass die Logikschaltung (20) bei einer elektrischen Energieversorgung über den ersten Anschluss (17) eine Initialisierung der Slave-Station (11) vornimmt und der Energiespeicher (23) durch eine elektrische Spannung zwischen den BUS-Leitungen (2, 3) aufladbar ist, dass die Logikschaltung (20) derart konfiguriert ist, dass die Logikschaltung (20) nach Abarbeitung aller für die Initialisierung notwendigen Schritte ein Schaltsignal auslöst, um einen Testschalter (15) zu schließen, der in Reihe zu einer Strombegrenzung (16) geschaltet ist und den ersten und zweiten Anschluss (17, 18) verbindet, und dass dann die Logikschaltung (20) bei einer Unterschreitung eines vorgegebenen Wertes durch eine Potentialdifferenz zwischen dem ersten und zweiten Anschluss (17, 18) ein Signal zum Schließen des Verbindungsschalters (14) auslöst.

2. Slave-Station nach Anspruch 1, **dadurch gekennzeichnet, dass** die Slave-Station einen Arbeitsenergiespeicher (72) aufweist, dass der Arbeitsenergiespeicher (72) bei der Initialisierung leer ist und dass der Arbeitsenergiespeicher (72) durch die elektrische Spannung auf den BUS-Leitungen (2, 3) aufladbar ist.

3. Slave-Station nach einem der vorhergehenden Ansprüche, **dadurch gekennzeichnet, dass** die für den Betrieb der Logikschaltung (20) erforderliche Energie dem Energiespeicher (23) entnommen wird, und dass die entnommene Energie durch die elektrische Spannung auf den BUS-Leitungen (2, 3) ersetzbar ist.

4. Slave-Station nach Anspruch 3, **dadurch gekennzeichnet, dass** die Logikschaltung (20) nach dem Aufladen des Arbeitsenergiespeichers (72) die BUS.Leitungen (2, 3) auf elektrische Signale, die eine vorgegebene Nachricht darstellen, untersucht, und dass die Logikschaltung (20) als Reaktion auf diese Nachricht unter Verwendung der im Arbeitsenergiespeicher (72) gespeicherten Energie eine Handlung auslöst.

5. Slave-Station nach Anspruch 3 oder 4, **dadurch gekennzeichnet, dass** die Logikschaltung (20) auf eine vorgegebene Nachricht hin ein Signal zur Öffnung des Verbindungsschalters (14) erzeugt, und dass von der Logikschaltung (20) danach wieder ein Signal zum Schließen des Testschalters (15) erzeugbar ist, wenn eine vorgegebene elektrische Spannung auf den BUS-Leitungen (2, 3) anliegt.#

6. Slave-Station nach Anspruch 3 bis 5, **dadurch gekennzeichnet, dass** die Logikschaltung (20) einen Speicher aufweist und dass in den Speicher eine Adresse einschreibbar ist, die bei der Initialisierung vor dem Schließen des Verbindungsschalter (14) von der Master-Station zur Slave-Station übertragen wurde.

7. Slave-Station nach Anspruch 3 bis 6, **dadurch gekennzeichnet, dass** die Slave-Station Mittel (80) zur Erzeugung eines elektrischen Signals auf den BUS-Leitungen aufweist, und dass die Mittel (80) von der Logikschaltung (20) ansteuerbar sind.

8. BUS-System mit einer Master-Station und mindestens zwei Slave-Stationen, die durch BUS-Leitungen miteinander verbunden sind, wobei die Master-Station eine Steuerlogik (4) aufweist und über die BUS-Leitungen (2, 3) eine Versorgungsspannung für die Slave-Stationen (11, 12, 13, 24) zur Verfügung stellt, **dadurch gekennzeichnet, dass** bei einer Inbetriebnahme des BUS-Systems bei einer Initialisierung von der Master-Station (1) mittels der Steuerlogik (4) eine Spannung an die BUS-Leitungen (2, 3) angelegt wird, dass nach der Master-Station eine erste Slave-Station (11), die eine Logikschaltung (20) aufweist, mit den BUS-Leitungen (2, 3) verbunden ist, wobei mindestens eine BUS-Leitung (2) durch einen geöffneten Verbindungsschalter in der ersten Slave-Station (11) unterbrochen ist und so nachfolgende, in Reihe geschaltete Slave-Stationen (12, 13, 24) von der Master-Station (1) elektrisch getrennt sind, dass sich dann die erste Slave-Station (11) initialisiert und dabei einen Energiespeicher (23) auflädt, und dass danach die erste Slave-Station (11) mittels der Logikschaltung (20) den Verbindungsschalter (14) schließt, sodass dann die nachfolgende ebenso aufgebaute, in Reihe geschaltete Slave-Station (12, 13, 24) von der Versorgungsspannung versorgt wird.

9. BUS-System nach Anspruch 8, **dadurch gekennzeichnet, dass** die nachfolgenden Slave-Stationen (12, 13, 24) ebenfalls einen Verbindungsschalter (14) aufweisen, der bei der Initialisierung zunächst geöffnet ist und die mindestens eine BUS-Leitung (2) unterbricht, dass sich jede Slave-Station (12, 13, 24) initialisiert und nach der Initialisierung den Verbindungsschalter (14) schließt.

10. BUS-System nach Anspruch 8 oder 9, **dadurch gekennzeichnet, dass** mindestens eine weitere Slave-Station (111, 112) mit einem Energiespeicher (123) vorgesehen ist, die durch weitere BUS-Leitungen (102, 103) elektrisch parallel zu einer Slave-Station (11, 12, 13, 24) geschaltet ist.

11. BUS-System nach Anspruch 10, **dadurch gekennzeichnet, dass** die weiteren BUS-Leitungen (102, 103) elektrisch mit den BUS-Leitungen (2, 3) verbunden sind und dass in mindestens einer der weiteren BUS-Leitungen (102, 103) zwischen der weiteren Slave-Station (111, 112) und den BUS-Leitungen (2, 3) ein Widerstand (104, 105) angeordnet ist.

12. BUS-System nach Anspruch 10, **dadurch gekennzeichnet, dass** die weiteren BUS-Leitungen (102, 103) elektrisch mit den BUS-Leitungen (2, 3) verbunden sind, und dass zwischen den weiteren Slave-Stationen (111, 112) und den BUS-Leitungen (2, 3) in mindestens einer der weiteren BUS-Leitungen (102, 103) ein Schalter (91) angeordnet ist.

13. BUS-System nach Anspruch 10; **dadurch gekennzeichnet, dass** eine BUS-Leitung (2) einen Schalter aufweist, dass eine der weiteren BUS-Leitungen (102) einen ersten elektrischen Anschluss vor dem Schalter und einen zweiten elektrischen Anschluss nach dem Schalter aufweist und dass die weiteren Slave-Stationen (111, 112) an die weitere BUS-leitung (102) zwischen den beiden Anschlusspunkten angeschlossen sind.

14. BUS-System nach Anspruch 11, **dadurch gekennzeichnet, dass** während der Initialisierung von der Master-Station (1) Adressen für die Slave-Stationen (11, 12, 13, 24) auf die BUS-Leitungen gegeben werden, dass nach Ausgabe einer Adresse für eine Slave-Station (11) nach einer vorgegebenen Zeit eine Adresse für eine weitere Slave-Station (111) ausgegeben wird, wobei die Zeit unter Berücksichtigung des Widerstands, mit dem die weitere BUS-Leitung (102) mit der BUS-Leitung (2) verbunden ist, ausgewählt ist.

15. BUS-System nach Anspruch 12 oder 13, **dadurch gekennzeichnet, dass** während der Initialisierung Adressen für die Slave-Stationen (11, 12, 13, 24) von der Master-Station (1) auf die BUS-Leitungen (2, 3) gegeben werden, und dass durch die Stellung der Schalter (91, 92, 93) bestimmt wird, für welche Slave-Station (11, 12) oder weitere Slave-Station (111, 112) die Adresse bestimmt ist.

16. Verfahren zum Betreiben eines BUS-Systems mit einer Master-Station und mindestens zwei Slave-Stationen , die durch BUS-Leitungen miteinander verbunden sind, wobei die Master-Station über die BUS-Leitungen (2, 3) eine Versorgungsspannung für die Slave-Stationen (11, 12, 13, 24) zur Verfügung stellt, **dadurch gekennzeichnet, dass** bei einer Inbetriebnahme des BUS-Systems zunächst eine Initialisierung durchgeführt wird, dass bei der Initialisierung von der Master-Station (1) eine Spannung an die BUS-Leitungen (2, 3) angelegt wird, dass nach der Master-Station eine erste Slave-Station (11) mit den BUS-Leitungen (2, 3) verbunden ist, wobei mindestens eine BUS-Leitung durch einen geöffneten Verbindungsschalter in der Slave-Station (11) unterbrochen wird und so nachfolgende, in Reihe geschaltete Slave-Stationen von der Master-Station elektrisch getrennt werden, dass sich dann die erste Slave-Station (11) initialisiert und dabei einen Energiespeicher (23) auflädt, und dass danach der Verbindungsschalter (14) geschlossen wird, sodass dann nachfolgende, in Reihe geschaltete Slave-Stationen (12, 13, 24) von der Versorgungsspannung versorgt werden.

## Claims

1. Slave station (11, 12, 13, 24) for a BUS system with a master station (1) and with at least two such slave stations (11, 12, 13, 24) which are connected by means of two bus lines (2, 3), with the slave station (11, 12, 13, 24) having a first and a second connection (17, 18) which can each be connected to a bus line (2), with the slave station (11, 12, 13, 24) having a connecting switch (14) and an energy store (23), the connecting switch (14) being arranged between the first and the second connection (17, 18), **characterized in that** the slave station (11, 12, 13, 24) has a logic circuit (20) which is designed in such a way that it initializes the slave station (11) when it is supplied with electrical energy by means of the first connection (17) and the energy store (23) can be charged by an electrical voltage between the BUS lines (2, 3), **in that** the logic circuit (20) is designed in such a way that it initiates a switching signal after all of the steps required for initialization are executed, in order to close a test switch (15) which is connected in series with a current-limiting means (16) and connects the first and second connections (17, 18), and **in that** the logic circuit (20) then initiates a signal for closing the connecting switch (14) when a potential difference between the first and second connections (17, 18) falls below a prespecified value.

2. Slave station according to Claim 1, **characterized in that** the slave station has a working energy store (72), **in that** the working energy store (72) is empty during initialization, and **in that** the working energy store (72) can be charged by the electrical voltage on the BUS lines (2, 3).

3. Slave station according to either of the preceding claims, **characterized in that** the energy which is required to operate the logic circuit (20) is drawn from the energy store (23), and **in that** the energy which is drawn can be replaced by the electrical voltage on the BUS lines (2, 3).

4. Slave station according to Claim 3, **characterized in that**, after the working energy store (72) is charged, the logic circuit (20) examines the BUS lines (2, 3) for electrical signals which represent a prespecified message, and **in that** the logic circuit (20) initiates an action as a reaction to this message using the energy which is stored in the working energy store (72).

5. Slave station according to Claim 3 or 4, **characterized in that** the logic circuit (20) generates a signal for opening the connecting switch (14) in response to a prespecified message, and **in that** the logic circuit (20) can then again generate a signal for closing the test switch (15) when a prespecified electrical voltage is applied to the BUS lines (2, 3).

6. Slave station according to Claims 3 to 5, **characterized in that** the logic circuit (20) has a memory, and **in that** an address, which was transmitted from the master station to the slave station during initialization before the connecting switch (14) was closed, can be written to the memory.

7. Slave station according to Claims 3 to 6, **characterized in that** the slave station has means (80) for generating an electrical signal on the BUS lines, and **in that** the means (80) can be actuated by the logic circuit (20).

8. BUS system with a master station and at least two slave stations which are connected to one another by BUS lines, with the master station having a control logic system (4) and providing a supply voltage for the slave stations (11, 12, 13, 24) by means of the BUS lines (2, 3), **characterized in that** the master station (1), by means of the control logic system (4), applies a voltage to the BUS lines (2, 3) when the BUS system is put into operation during initialization, **in that**, downstream of the master station, a first slave station (11) which has a logic circuit (20) is connected to the BUS lines (2, 3), with at least one BUS line (2) being interrupted by an open connecting switch in the first slave station (11) and downstream slave stations (12, 13, 24) which are connected in series thus being electrically isolated from the master station (1), **in that** the first slave station (11) is then initialized and in the process an energy store (23) is charged, and **in that** the first slave station (11) then closes the connecting switch (14) by means of the logic circuit (20), so that the supply voltage is then supplied to the downstream slave station (12, 13, 24) which is of similar construction and connected in series.

9. BUS system according to Claim 8, **characterized in that** the downstream slave stations (12, 13, 24) likewise have a connecting switch (14) which is initially open during initialization and interrupts the at least one BUS line (2), **in that** each slave station (12, 13, 24) is initialized and closes the connecting switch (14) following initialization.

10. BUS system according to Claim 8 or 9, **characterized in that** at least one further slave station (111, 112) is provided with an energy store (123) and is electrically connected parallel to a slave station (11, 12, 13, 24) by further BUS lines (102, 103).

11. BUS system according to Claim 10, **characterized in that** the further BUS lines (102, 103) are electrically connected to the BUS lines (2, 3), and **in that** a resistor (104, 105) is arranged in at least one of the further BUS lines (102, 103) between the further slave station (111, 112) and the BUS lines (2, 3).

12. BUS system according to Claim 10, **characterized in that** the further BUS lines (102, 103) are electrically connected to the BUS lines (2, 3), and **in that** a switch (91) is arranged between the further slave stations (111, 112) and the BUS lines (2, 3) in at least one of the further BUS lines (102, 103).

13. BUS system according to Claim 10, **characterized in that** a BUS line (2) has a switch, **in that** one of the further BUS lines (102) has a first electrical connection upstream of the switch and a second electrical connection downstream of the switch, and **in that** the further slave stations (111, 112) are connected to the further BUS line (102) between the two connection points.

14. Bus system according to Claim 11, **characterized in that** addresses for the slave stations (11, 12, 13, 24) are transmitted on the BUS lines from the master station (1) during initialization, **in that** an address for a further slave station (111) is output after an address for a slave station (11) is output following a prespecified time which is selected taking account of the resistor with which the further BUS line (102) is connected to the BUS line (2).

15. BUS system according to Claim 12 or 13, **characterized in that** addresses for the slave stations (11, 12, 13, 24) are transmitted from the master station (1) on the BUS lines (2, 3) during initialization, and **in that** the position of the switches (91, 92, 93) determines which slave station (11, 12) or further slave station (111, 112) the address is intended for.

16. Method for operating a BUS system with a master station and at least two slave stations which are connected to one another by BUS lines, with the master station providing a supply voltage for the slave stations (11, 12, 13, 24) by means of the BUS lines (2, 3), **characterized in that** when the BUS system is put into operation initialization is initially carried out, **in that** the master station (1) applies a voltage to the BUS lines (2, 3) during initialization, **in that** a first slave station (11) is connected to the BUS lines (2, 3) downstream of the master station, with at least one BUS line being interrupted by an open connecting switch in the slave station (11) and downstream slave stations which are connected in series thus being electrically isolated from the master station, **in that** the first slave station (11) is then initialized and in the process an energy store (23) is charged, and **in that** the connecting switch (14) is then closed, so that the supply voltage is then supplied to downstream slave stations (12, 13, 24) which are connected in series.

## Revendications

1. Station esclave (11, 12, 13, 24) pour un bus comportant une station maître (1) et au moins deux telles stations esclaves (11, 12, 13, 24) reliées par deux lignes de bus (2, 3),
la station esclave (11, 12, 13, 24) ayant un premier et un second branchement (17, 18) qui peuvent être reliés à une ligne de bus (2),
la station esclave (11, 12, 13, 24) comporte un commutateur de liaison (14) et un accumulateur d'énergie (23),
le commutateur de liaison (14) est installé entre le premier et le second branchement (17, 18),
**caractérisée en ce que**
la station esclave (11, 12, 13, 24) comporte un circuit logique (20) configuré pour qu'avec une alimentation en énergie électrique, il assure par le premier branchement (17), l'initialisation de la station esclave (11) et charge l'accumulateur d'énergie (23) par la tension électrique entre les lignes de bus (2, 3),
le circuit logique (20) est configuré pour qu'après traitement de toutes les étapes nécessaires à l'initialisation, il déclenche un signal de commutation pour fermer un commutateur d'essai (15) en série avec l'alimentation en courant (16) et reliant le premier et le second branchement (17, 18), et
alors le circuit logique (20) en cas de dépassement d'une valeur prédéfinie par une différence de potentiel entre le premier et le second branchement (17, 18) déclenche un signal pour fermer le commutateur de liaison (14).

2. Station esclave selon la revendication 1,
**caractérisée en ce qu'**
elle comporte un accumulateur d'énergie de travail (72) qui est vide lors de l'initialisation, et
l'accumulateur d'énergie de travail (72) se charge à la tension électrique entre les lignes de bus (2, 3).

3. Station esclave selon l'une quelconque des revendications précédentes,
**caractérisée en ce que**
l'énergie nécessaire pour le fonctionnement du circuit logique (20) est prélevé dans l'accumulateur d'énergie (23), et
l'énergie prélevée est compensée par la tension électrique des lignes de bus (2, 3).

4. Station esclave selon la revendication 3,
**caractérisée en ce qu'**
après chargement de l'accumulateur d'énergie de travail (72), le circuit logique (20) examine les lignes de bus (2, 3) pour déterminer les signaux électriques qui représentent une information prédéfinie, et
en réaction à cette information, le circuit logique (20), utilisant l'énergie stockée dans l'accumulateur d'énergie de travail (72) déclenche une opération.

5. Station esclave selon l'une quelconque des revendications 3 ou 4,
**caractérisée en ce que**
le circuit logique (20) génère un signal d'ouverture du commutateur de liaison (14) en fonction d'une information prédéfinie, et
ensuite le circuit logique (20) génère de nouveau un signal pour fermer le commutateur d'essai (15) si une tension électrique prédéterminée est appliquée aux lignes de bus (2, 3).

6. Station esclave selon l'une quelconque des revendications 3 à 5,
**caractérisée en ce que**
le circuit logique (20) comporte une mémoire dans laquelle peut être inscrit une adresse qui a été transmise par la station maître à la station esclave lors de l'initialisation, avant la fermeture du commutateur de liaison (14).

7. Station esclave selon l'une quelconque des revendications 3 à 6,
**caractérisée en ce que**
la station esclave comporte des moyens (80) pour générer un signal électrique dans les lignes de bus et les moyens (80) sont commandés par le circuit logique (20).

8. Système de bus comportant une station maître et au moins deux stations esclaves reliées par les lignes de bus,
la station maître comportant une logique de commande (4) et fournissant par les lignes de bus (2, 3), une tension d'alimentation aux stations esclaves (11, 12, 13, 24),
**caractérisé en ce que**
lors de la mise en service du système de bus et de l'initialisation par la station maître (1) à l'aide de la logique de commande (4), une tension est appliquée aux lignes de bus (2, 3),
après la station maître, une première station esclave (11) comportant un circuit logique (20) est reliée aux lignes de bus (2, 3, et
au moins une ligne de bus (2) est coupée par un commutateur de liaison ouvert dans la première station esclave (11), et ainsi les stations esclaves suivantes (12, 13, 24) branchées en série sont coupées électriquement de la station maître (1), et
ensuite, la première station esclave (11) est initialisée et l'accumulateur d'énergie (23) se charge, et
ensuite, la première station esclave (11) ferme le commutateur de liaison (14) par le circuit logique (20) de sorte que la station esclave (12, 13, 24), suivante, de même construction, branchée en série est alimentée par la tension d'alimentation.

9. Système de bus selon la revendication 8,
**caractérisé en ce que**
les stations esclaves suivantes (12, 13, 24) comportent également un commutateur de liaison (14) qui est tout d'abord ouvert lors de l'initialisation et qui coupe au moins une ligne de bus (2) de sorte que chaque station esclave (12, 13, 24) est initialisée et après initialisation, elle ferme le commutateur de liaison (14).

10. Système de bus selon l'une quelconque des revendications 8 ou 9,
**caractérisé en ce qu'**
au moins une autre station esclave (111, 112) comporte un accumulateur d'énergie (123) qui branche les autres lignes de bus (102, 103), électriquement en parallèle par rapport à une station esclave (11, 12, 13, 24).

11. Système de bus selon la revendication 10,
**caractérisé en ce que**
les autres lignes de bus (102, 103) sont reliées électriquement aux lignes de bus (2, 3), et
une résistance (104, 105) est installée dans au moins l'une des autres lignes de bus (102, 103) entre l'autre station esclave (111, 112) et les lignes de bus (2, 3).

12. Système de bus selon la revendication 10,
**caractérisé en ce que**
les autres lignes de bus (102, 103) sont reliées électriquement aux lignes de bus (2, 3), et entre les autres stations esclaves (111, 112) et les lignes de bus (2, 3), on a un commutateur (91) dans au moins l'une des autres lignes de bus (102, 103).

13. Système de bus selon la revendication 10,
**caractérisé en ce qu'**
une ligne de bus (2) comporte un commutateur,
l'une des autres lignes de bus (102) comporte un premier branchement électrique en amont du commutateur et un second branchement électrique en aval du commutateur, et
les autres stations esclaves (111, 112) sont branchées sur l'autre ligne de bus (102) entre les deux points de branchement.

14. Système de bus selon la revendication 11,
**caractérisé en ce que**
pendant l'initialisation de la station maître (1), on transmet aux lignes de bus les adresses des stations esclaves (11, 12, 13, 24),
après l'émission d'une adresse pour une station esclave (11), après un temps prédéfini, on émet une adresse d'une autre station esclave (111),
le temps étant choisi en tenant compte de la résistance reliant l'autre ligne de bus (102) à la ligne de bus (2).

15. Système de bus selon l'une quelconque des revendications 12 ou 13,
**caractérisé en ce que**
pendant l'initialisation, la station maître (1) fournit aux lignes de bus (2, 3), des adresses pour les stations esclaves (11, 12, 13, 24), et
la position du commutateur (91, 92, 93) détermine la station esclave (11, 12) ou d'autres stations esclaves (111, 112) à laquelle est destinée l'adresse.

16. Procédé de gestion d'un système de bus avec une station maître et au moins deux stations esclaves reliées par les lignes de bus,
la station maître étant reliée par les lignes de bus (2, 3) à une tension d'alimentation des stations esclaves (11, 12, 13, 24),
**caractérisé en ce que**
lors de la mise en service du système de bus, on effectue tout d'abord une initialisation,
lors de l'initialisation, la station maître (1) applique une tension aux lignes de bus (2, 3),
après avoir relié la station maître, on relie une première station esclave (11) aux lignes de bus (2, 3),
au moins une ligne de bus étant coupée par un commutateur de liaison ouvert dans la station esclave (11), et ainsi des stations esclaves suivantes branchées en série sont séparées électriquement de la station maître,
on initialise ensuite la première station esclave (11) et ainsi on charge un accumulateur d'énergie (23), et
ensuite on ferme le commutateur de liaison (14) de sorte que les stations esclaves (12, 13, 24) en aval, branchées en série soient alimentées par la tension d'alimentation.
